# FASCICULE DE BREVET EUROPEEN

(11) **EP 2 954 648 B1**
(45) Date de publication et mention de la délivrance du brevet: **30.11.2022**
(21) Numéro de dépôt: 14702276.8
(22) Date de dépôt: 03.02.2014
(51) Int. Cl.: H04L 45/42

(54) **PROCÉDÉ POUR ROUTER DES DONNÉES, PROGRAMME D'ORDINATEUR, CONTRÔLEUR DE RÉSEAU ET RÉSEAUX ASSOCIÉS**
DATENROUTINGVERFAHREN, COMPUTERPROGRAMM, NETZWERKSTEUERUNG UND DAZUGEHÖRIGE NETZWERKE
METHOD FOR ROUTING DATA, COMPUTER PROGRAM, NETWORK CONTROLLER AND NETWORKS ASSOCIATED THEREWITH

(30) Priorité: 05.02.2013 FR 1350974
(43) Date de publication de la demande: 16.12.2015
(73) Titulaire: Byo Networks, 91400 Orsay (FR)
(72) Inventeur: TIRAT, Olivier, F-91400 Orsay (FR)
(74) Mandataire: Lavoix
(86) Numéro de dépôt international: PCT/EP2014/052064
(87) Numéro de publication internationale: WO 2014/122099

(56) Documents cités:
- US-A1- 2012 147 898

## Description

La présente invention concerne le domaine du routage dans les réseaux informatiques.

Plus précisément, l'invention est relative à un procédé pour router des données dans un réseau informatique découpé en segments de réseau. Le réseau informatique comporte des machines, un ensemble d'équipement(s) d'interconnexion des machines et un ensemble de contrôleurs de réseau comportant chacun une base de données et associé chacun à au moins une partie respective du réseau. Chaque contrôleur définit des règles comportant au moins des règles de routage pour ladite partie respective associée du réseau, et transmet lesdites règles aux équipements d'interconnexion de ladite partie respective associée du réseau. Et un équipement d'interconnexion est adapté pour router, dans le réseau, en fonction desdites règles qui lui ont été transmises, des données échangées entre deux machines.

Dans les réseaux de données IP classiques, le routage est assuré par des équipements d'interconnexion de type commutateurs et routeurs. Les commutateurs ont pour fonction d'interconnecter des machines appartenant au même segment de réseau, i.e. de router les données échangées entre ces machines, tandis que les routeurs ont pour fonction de router les données échangées d'un segment de réseau à un autre segment de réseau. Les structures logiques et physiques de ces réseaux étant très liées, la connaissance de la topologie du réseau physique est indispensable à la mise en oeuvre du routage du réseau. Les routeurs dans ces réseaux IP maintiennent des tables de correspondance, appelées tables de routage, indiquant le chemin logique, i.e. par exemple une adresse IP du prochain destinataire, pour permettre in fine la transmission des données vers le destinataire final, repéré par exemple par son adresse IP. Ces tables de routage dans un routeur sont élaborées et maintenues par des processus internes au routeur. Elles peuvent comporter des parties statiques et/ou dynamiques.

Plusieurs inconvénients découlent de cette mise en œuvre du routage. En effet, les informations sur la topologie du réseau sont maintenues de façon partielle et disparate dans les commutateurs et les routeurs utilisant ces informations. En outre, une modification de topologie du réseau peut impliquer le changement de plusieurs configurations de ces équipements, qui doit être réalisé de façon simultanée de manière à réaliser les interconnexions nécessaires.

Récemment, l'architecture de réseau configurée logiquement, nommée SDN (en anglais « Software-Defined Networking ») est apparue. Un exemple est donné dans le document US 2012/147 898. Selon cette architecture, le plan de contrôle, i.e. l'élaboration des règles de routage, est découplée du plan de données, i.e. de l'application de ces règles de routage aux données. L'architecture SDN permet notamment une mise en oeuvre facilitée d'éléments virtuels du réseau, associés à un certain nombre de caractéristiques et de fonctionnalités et qui s'appuient sur des éléments physiques qui peuvent être changés de façon transparente vis-à-vis de l'utilisation de l'élément virtuel. Les données du réseau sont acheminées par des équipements d'interconnexion conformément à des règles de routage produites par des contrôleurs de réseau, puis transmises ensuite aux équipements d'interconnexion. Ces règles de routage définies par le contrôleur permettent d'interconnecter les machines, virtuelles ou physiques, les unes avec les autres, sans pour autant avoir à identifier leur position physique dans le réseau, ou leur raccordement physique aux équipements d'interconnexion du réseau. Elles déterminent aussi les chemins suivis par les données en sortie de chaque équipement d'interconnexion du réseau configuré logiquement. Afin d'élaborer ces règles, les contrôleurs de réseaux comportent une base de données, à caractère statique ou dynamique, décrivant le réseau, en fonction desquelles les contrôleurs définissent les règles de routage.

La présente invention vise à proposer une solution contribuant à résoudre les inconvénients cités plus haut, et qui trouve notamment une application dans les réseaux implémentant l'architecture SDN.

A cet effet, l'invention décrit un procédé pour router des données selon la revendication 1.

Dans des modes de réalisation, le procédé pour router des données comprend une ou plusieurs des caractéristiques des revendications 2 à 7.

L'invention se rapporte également à un programme d'ordinateur selon la revendication 8, un contrôleur de réseau selon la revendication 9 ou un réseau informatique selon la revendication 10.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un réseau informatique dans un mode de réalisation de l'invention ;
- la figure 2 est un organigramme d'étapes d'un procédé dans un mode de réalisation de l'invention.

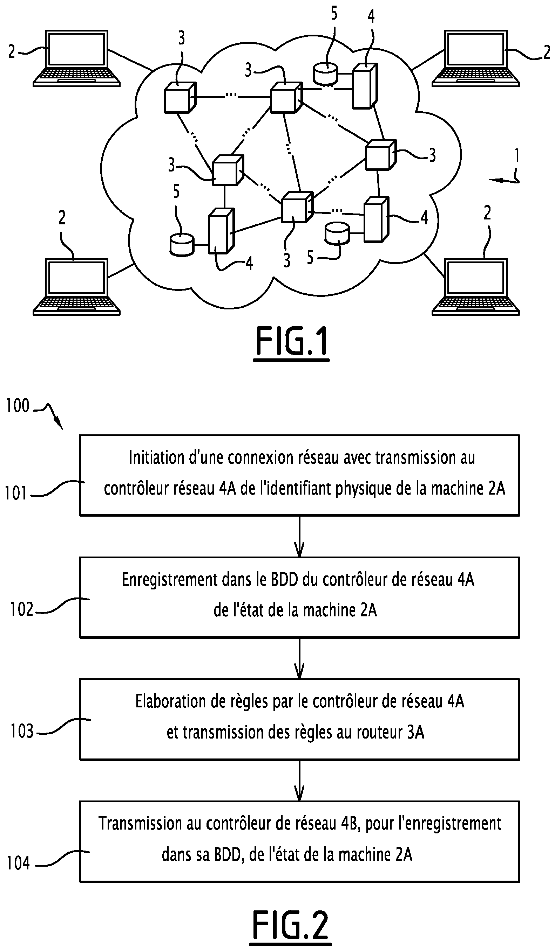

La figure 1 représente un réseau informatique SDN 1 dans un mode de réalisation de l'invention.

Le réseau informatique 1 comprend plusieurs éléments de réseau dont seule une partie est représentée sur la figure 1 : une pluralité de machines 2, des équipements d'interconnexion 3, nommés ci-après routeurs 3, et des contrôleurs de réseau 4, ainsi que des liaisons (câbles, liens radios) de télécommunication reliant directement entre eux certains de ces éléments de manière à former un maillage du réseau 1 permettant une mise en relation entre elles des machines 2, par l'intermédiaire des routeurs 3, sous le contrôle des contrôleurs 4 de réseau.

Chaque élément du réseau est identifié par un identifiant machine, qui peut être un identifiant physique ou adresse physique, correspondant au niveau 2 du standard OSI (en anglais « Open Systems Interconnection »). Un tel identifiant machine est par exemple stocké dans une carte réseau de l'élément et est immuable tout au long de la vie de l'élément, même lorsqu'il est déplacé.

Chaque élément du réseau est en outre identifié par un identifiant réseau, par exemple une adresse IP, correspondant au niveau 3 du standard OSI.

Les machines 2 sont par exemple des PC, des serveurs etc., situés aux extrémités du réseau 1. Chaque machine 2 est adaptée pour transmettre des données à destination d'une autre machine et/ou pour recevoir des données en provenance d'une autre machine 2. A la différence des autres éléments du réseau, les machines 2 sont caractérisées par le fait qu'elles ne n'ont pas besoin de recevoir de règles des contrôleurs 4 pour communiquer avec les autres machines 2 du réseau.

Chaque machine 2 du réseau est directement raccordée à un routeur 3 par une liaison de communication. On nommera ci-dessous « routeur de raccordement de la machine 2 » ce routeur.

Chaque contrôleur de réseau 4 est associé à une base de données 5. Il est adapté pour contrôler un ou des routeurs 3 qui lui sont respectivement associés et ainsi contrôler le flux de données transitant par ces routeurs 3. Chaque contrôleur 4 est ainsi associé à une partie respective du réseau comprenant les routeurs ainsi contrôlés par lui et les machines qui sont directement reliées à ces routeurs. Un contrôleur de réseau 4 est ainsi adapté pour définir des règles, notamment des règles de routage, destinées à ces routeurs 3, en fonction de données stockées dans sa base de données 5 relatives notamment à des machines 2 et pour transmettre les règles, comprenant les règles de routage, définies aux routeurs 3 qu'il contrôle, ces routeurs stockant ces règles de routage. Il est adapté en outre pour effectuer par exemple des opérations de comptage d'événements donnés survenant au niveau des routeurs contrôlés etc.

Le réseau informatique 1 est réparti en une pluralité de segments de réseau.

Un segment de réseau est défini comme étant un ensemble de machines 2 du réseau 1 qui partagent entre elles la connaissance de leur identifiant machine pour communiquer directement entre elles, et qui, pour communiquer entre elles, s'identifient à l'aide de ce seul identifiant machine.

Un segment de réseau peut être interconnecté avec un autre segment de réseau par l'intermédiaire d'un routeur 3.

Les segments de réseau sont identifiés par des identifiants logiques de segment de réseau propres au réseau 1.

Un routeur 3 est un équipement d'interconnexion : il est adapté pour recevoir un paquet de données envoyé initialement par une machine A à destination finale d'une machine B, pour déterminer en fonction de l'identifiant réseau de la machine B, de l'identifiant réseau de la machine, et éventuellement d'autres critères, la ou les règles de routage qui s'applique(nt), et pour appliquer les règles de routage, qui indique le chemin jusqu'au prochain élément de réseau, qui peut être une machine 2 ou un routeur 3, auquel transmettre le paquet de données

Dans un mode de réalisation, le contrôleur de réseau 4 comporte une mémoire et un microprocesseur, et les étapes décrites ci-dessous relevant d'un contrôleur de réseau sont mises en oeuvre par ce contrôleur de réseau suite à l'exécution, sur le microprocesseur, des instructions logicielles d'un programme stocké dans la mémoire.

Dans un premier mode de réalisation d'un procédé 100 selon l'invention, les étapes suivantes sont mises en œuvre, en référence à la figure 2.

On considère qu'une machine 2, nommée ci-après 2A, se connecte pour la première fois au réseau 1.

Dans une étape 101, la machine 2A émet sur le réseau 1 un paquet de première connexion indiquant son identifiant physique.

Un routeur 3 reçoit ce paquet. Le routeur est repéré ci-après par la référence 3A. Si le routeur 3A ne dispose à ce stade d'aucune règle relative au paquet transmis par la machine 2A, le routeur 3A ne transmet ce paquet à destination du contrôleur 4 qui le contrôle, nommé 4A ci-après.

Dans une étape 102, le contrôleur de réseau 4A contrôlant le routeur 3A reçoit ce paquet indiquant l'identifiant physique de la machine 2A, puis il vérifie si cet identifiant physique existe dans sa base de données 5, nommée 5A ci-après.

Dans le cas positif, il associe l'identifiant physique de la machine 2A au segment de réseau auquel la machine 2A appartient. Il enregistre cette association dans la base de données 5A.

Dans le cas négatif, il applique des règles d'association par défaut entre l'identifiant de la machine 2A et les segments de réseaux connus du contrôleur 4A pour déterminer une association par défaut entre cet identifiant machine et un segment de réseau. Il enregistre dans sa base de données 5A cette association par défaut. Le contrôleur 4A peut enregistrer dans la base 5A une association particulière avec un segment particulier interdisant toute communication à la machine 2A dans un mode de réalisation particulier de l'invention.

Dans un mode de réalisation, cet identifiant de segment réseau associé à l'identifiant de la machine 2A est un identifiant du segment réseau du routeur 3A ayant transmis le paquet au contrôleur de réseau 4A à l'étape 101, qui est le routeur directement connecté à la machine 2A.

Cette association entre l'identifiant physique de la machine 2A et des informations additionnelles comprenant au moins l'identifiant du segment réseau auquel cette machine 2A appartient, est nommé « état» de la machine 2A.

Dans le cas où ces informations additionnelles comprennent uniquement l'identifiant du segment réseau, l'état est alors nommé « état minimal de type segment de la machine 2A ».

Dans une opération 103 ultérieure d'élaboration de règles, notamment de règles de routage, par le contrôleur de réseau 4A, ces règles, notamment de routage, sont élaborées en fonction du contenu ainsi modifié de la base de données 5A, et sont donc élaborées en fonction de cet état enregistré relatif à la machine 2A. Puis ces règles prenant en compte notamment dans le routage, la machine 2A, sont transmises aux routeurs 3 contrôlés par le contrôleur de réseau 4A, y compris le routeur 3A.

Les routages et traitements alors effectués par ces routeurs 3, s'appuient sur ces règles mises à jour reçues, prenant en compte la machine 2A.

Dans une étape 104, qui peut dans un mode de réalisation avoir lieu avant l'étape 103, le contrôleur de réseau 4A transmet à un contrôleur de réseau 4B, par l'intermédiaire du réseau 1 ou par tout autre mode de transmission, l'état de la machine 2A ou au moins une partie de cet état comprenant l'état minimal de la machine 2A.

Le contrôleur de réseau 4B vérifie si cet état existe dans sa base de données 5, nommée 5B ci-après.

Dans le cas positif, il met à jour l'état du réseau pour la machine concernée dans sa base de données 5B.

Dans le cas négatif, il enregistre dans sa base de données 5B cet état de la machine 2A ainsi reçu. L'enregistrement de cet état peut être conditionné par la vérification de certaines conditions, notamment, relative à l'identification du contrôleur 4A, la capacité ou l'autorisation du contrôleur 4A à modifier la base 5B, l'existence de l'identifiant de segment sur le réseau 1, relative au nombre de machines 2 enregistrées sur le segment de réseau identifié, relative à la présence de l'identifiant machine dans une base d'identifiant spécifiquement autorisés ou interdit.

Dans une opération ultérieure d'élaboration de règles, notamment de règles de routage, par le contrôleur de réseau 4B, ces règles, notamment de routage, sont élaborées en fonction du contenu ainsi modifié de la base de données 5B, et sont donc élaborées en fonction de cet état enregistré relatif à la machine 2A. Puis ces règles prenant en compte notamment dans le routage, la machine 2A, sont transmises aux routeurs 3 contrôlés par le contrôleur de réseau 4B.

Les routages et traitements alors effectués par ces routeurs 3, s'appuient sur ces règles mises à jour reçues, prenant en compte la machine 2A.

Dans un mode de réalisation, l'étape 104 de diffusion de l'état de la machine 2A n'est réalisée qu'après qu'une connexion logique de la machine 2A au réseau 1 n'ai eu lieu.

Dans un mode de réalisation, chaque contrôleur 4 du réseau 1 est adapté pour effectuer une opération de transmission, à au moins un autre contrôleur 4 du réseau 1, de l'indication des modifications relatives aux états, et qui lui ont été ainsi diffusées ou qui sont survenues dans sa base de données 5. Ces modifications comprennent par exemple l'ajout de nouveaux états de machines ou la suppression d'états de machines.

Et cet autre contrôleur de réseau 4 est adapté pour enregistrer dans sa propre base de données, ces modifications survenues.

Ces opérations peuvent avoir lieu chaque période de longueur T par exemple ou bien sur modification des informations contenues dans la base des autres contrôleurs.

Dans un mode de réalisation, ces mises à jour des états sont mises en œuvre par l'intermédiaire de mécanismes de synchronisation de bases de données.

Cette diffusion des modifications portant sur les états des machines depuis chaque contrôleur de réseau 4 à destination d'au moins un autre contrôleur de réseau 4 permet la mise à jour progressive des bases de données des contrôleurs à travers tout le réseau 1.

Dans un mode de réalisation, chaque identifiant physique de machine et chaque identifiant de segment réseau est unique, à tout instant.

Dans un mode de réalisation, chaque association entre l'identifiant physique de la machine 2A et l'identifiant du segment réseau est unique dans le réseau, à tout instant.

Dans un deuxième mode de réalisation, dans l'état de la machine 2A enregistré dans la base de données 5A, le contrôleur de réseau 4A enregistre l'identifiant réseau d'un contrôleur associé à la machine 2A à la place de l'identifiant du segment de réseau dans l'étape 102, les autres étapes se déroulant de manière similaire en prenant en compte cet état ainsi défini.

Dans un mode de réalisation, le contrôleur de réseau 4A s'enregistre son identifiant réseau en tant qu'identifiant réseau du contrôleur associé à la machine 2A ou enregistre l'identifiant réseau d'un autre contrôleur de réseau en tant qu'identifiant réseau du contrôleur associé à la machine 2A.

Dans un mode de réalisation, l'identifiant réseau associé à la machine 2A est celui du contrôleur ayant le contrôle de l'équipement de réseau 3A auquel est raccordée la machine 2A.

Dans le cas où les informations additionnelles comprennent uniquement l'identifiant du contrôleur réseau associé à la machine 2A, l'état est alors nommé « état minimal de type contrôleur de réseau de la machine 2A ».

Dans un mode de réalisation, si le contrôleur réseau 4A recevant à l'étape 101 le message du routeur 3A, détecte qu'il n'est pas compétent pour réaliser l'association relative à la machine 2A, il détermine quel contrôleur de réseau est a priori compétent sur la base par exemple d'informations de configuration incluses dans la base 5A associant l'identifiant de la machine 2A à l'identifiant réseau du contrôleur compétent. Il transmet alors à ce contrôleur de réseau ce paquet indiquant l'identifiant machine de la machine 2A.

Lorsque ce paquet parvient à un contrôleur de réseau qui se détecte compétent, éventuellement après être passé par plusieurs contrôleurs de réseau qui se sont détectés comme incompétents, ce contrôleur de réseau compétent effectue l'association entre l'identifiant physique de la machine 2A et les informations additionnelles mentionnées ci-dessus à l'étape 102 dans sa base de données et met en œuvre les opérations indiquées aux étapes 103-104 comme relevant du contrôleur de réseau 4A.

Dans un mode de réalisation, si le contrôleur réseau 4A recevant à l'étape 101 le message du routeur 3A, détecte qu'il n'est pas compétent pour réaliser et enregistrer l'association relative à la machine 2A, il détermine quel contrôleur de réseau est a priori compétent sur la base des informations incluses dans la base 5A associant l'identifiant de la machine 2A à l'identifiant réseau du contrôleur compétent. Il transmet alors à ce contrôleur de réseau ce paquet indiquant l'adresse physique de la machine.

Dans un mode de réalisation, les informations enregistrées dans l'état de la machine 2A lors de l'étape d'association 101 comportent, outre l'identifiant physique de la machine 2A, l'identifiant de segment de réseau (et/ou de l'identifiant réseau du contrôleur de réseau associé à la machine 2A) associé à la machine 2A dans l'état de la machine 2A
- un ou plusieurs identifiants réseau identifiant la machine 2A, connus notamment par un ou des routeurs 3 contrôlés par le contrôleur de réseau 4 associé à la base de données 5 dans lequel l'état considéré relatif à la machine 2A se trouve enregistré ;
- une indication de la validité de l'association entre l'identifiant physique de la machine 2A et l'identifiant de segment de réseau (ou l'identifiant réseau du contrôleur de réseau) réalisée dans l'état de la machine 2A, par exemple une date limite de validité de l'association au-delà de laquelle l'association disparait de la base 5A et impactant les règles associées ;
- une identification du mécanisme d'authentification (par exemple du serveur) ayant validé l'association ;
- une date limite de la validité de l'association ;
- un identifiant de segment virtuel de type tag VLAN ou VxLAN ;
- une adresse réseau du contrôleur réseau ayant réalisé l'association ;
- un ou plusieurs identifiants réseau des routeurs 3 contrôlés par le contrôleur 4 ayant réalisé l'association ;
- des informations de géo-localisation de la machine 2A ou du contrôleur 3A ou du contrôleur ayant enregistré l'association.

Dans le mode de réalisation considéré ci-dessus, la déclaration de l'état minimal au contrôleur de réseau est faite à la première connexion de la machine 2 au réseau 1. Dans un mode de réalisation, elle peut être réalisée à tout autre moment, par exemple, à la création d'une nouvelle interface réseau sur la machine 2A, ou bien lors du renouvellement de la connexion.

Dans le mode de réalisation décrit ci-dessus, l'association entre l'identifiant physique d'une machine et l'identifiant du segment de réseau, ou l'association entre l'identifiant physique d'une machine et l'identifiant du contrôleur de réseau, est réalisée par un contrôleur de réseau 4 sur la base de l'envoi par la machine 2A d'un paquet de première connexion. Dans un autre mode de réalisation, cette association est déterminée à la place par un processus de connexion autre que la diffusion d'un premier paquet. Ce processus de connexion peut contenir des mécanismes d'authentification permettant d'associer une identité à la machine 2A et de certifier cette identité. L'identifiant de segment peut alors être associé à l'identité certifiée par le mécanisme d'authentification permettant une association dynamique entre l'identifiant de la machine 2A et l'identifiant du segment de réseau. Dans un mode préférentiel de connexion, la machine client et le contrôleur utilisent le protocole EAP pour réaliser cette association. Tout autre mécanisme d'authentification de connexion peut être utilisé aux mêmes fins. L'association ainsi déterminée est ensuite transmise à un contrôleur de réseau 4, pour stockage par ce dernier dans sa base de données 5, puis diffusion vers d'autres contrôleurs de réseau 4.

Dans un mode de réalisation, un ou plusieurs contrôleurs de réseau 4 délèguent, à un autre contrôleur de réseau spécifique 4, l'élaboration de tout ou partie des règles de routage relatives aux routeurs qu'il(s) contrôle(nt) et auxquels ils envoient in fine les règles élaborées en tout ou partie par le contrôleur de réseau spécifique. Dans un tel cas, l'état des machines 2 associées à ces contrôleurs de réseau délégant les règles est diffusé au contrôleur de réseau spécifique.

Dans un mode de réalisation, lorsque les états d'une base de données 5 d'un contrôleur de réseau sont modifiés, ce dernier élabore et transmet des nouvelles règles pour les routeurs, soit en totalité, soit de manière différentielle par rapport aux règles élaborées et/ou transmises précédemment par ce contrôleur de réseau 4.

Ainsi un procédé permet d'élaborer et de maintenir au niveau des contrôleurs de réseau un ensemble de données centralisé décrivant, à tout instant, l'état du réseau.

Le procédé selon l'invention permet en outre de diminuer le volume de données nécessaires à transmettre entre contrôleurs d'un même réseau en remplaçant par la transmission des états, les transmissions des règles par les équipements.

La présente invention a été décrite ci-dessus en référence à un réseau informatique SDN. Néanmoins, elle peut être mise en œuvre pour tout type de réseau.

## Revendications

1. Procédé pour router des données dans un réseau informatique (1) découpé en segments logiques de réseau, ledit réseau informatique comportant :
- des machines (2),
- un ensemble d'équipement(s) d'interconnexion (3) des machines et
- un ensemble de contrôleurs (4) comportant chacun une base de données (5) et associés chacun à au moins une partie respective du réseau, chaque contrôleur définissant des règles comportant au moins des règles de routage pour ladite partie respective associée du réseau, et transmettant lesdites règles aux équipements d'interconnexion de ladite partie respective associée du réseau,
selon lequel un équipement d'interconnexion est adapté pour router, dans le réseau, en fonction desdites règles qui lui ont été transmises, des données échangées entre deux machines,
ledit procédé étant **caractérisé en ce que** le procédé comprend les étapes suivantes :
- une étape de stockage, par un contrôleur de réseau, dans sa base de données, d'un ensemble d'informations comprenant un identifiant d'une machine en correspondance avec un paramètre associé, ledit paramètre associé comportant un identifiant du segment logique de réseau associé à ladite machine;
- une étape de transmission par ledit contrôleur de réseau à un autre contrôleur de réseau dudit ensemble d'informations, et une étape de stockage, par ledit autre contrôleur de réseau, dans sa base de données, dudit ensemble d'informations.

2. Procédé pour router des données selon la revendication 1, selon lequel ledit identifiant de la machine (2) est une adresse physique de ladite machine.

3. Procédé pour router des données selon la revendication 1 ou 2, selon lequel lesdites règles comportant au moins des règles de routage sont définies par un contrôleur de réseau (4) en fonction d'au moins l'identifiant de la machine et dudit paramètre associé stockés en correspondance dans sa base de données.

4. Procédé pour router des données selon l'une des revendications 1 à 3, selon lequel le contrôleur (4) identifié est un contrôleur transmettant des règles de routage à l'équipement d'interconnexion auquel ladite machine est directement reliée.

5. Procédé pour router des données selon l'une quelconque des revendications 1 à 4, selon lequel l'ensemble d'informations comprend l'identifiant de la machine (2) en correspondance avec le paramètre associé et l'un au moins des éléments parmi :
- au moins une adresse IP identifiant ladite machine pour au moins un des équipements d'interconnexion (3) ;
- l'indication d'une validité dudit ensemble d'information ;
- l'indication d'un mécanisme d'authentification dudit ensemble d'information ;
- une adresse d'un contrôleur de réseau (4) ayant initialement défini la correspondance entre l'identifiant de la machine et le paramètre associé dans l'ensemble d'informations ;
- un identifiant de segment virtuel de type tag VLAN ou VxLAN ;
- au moins une adresse IP d'au moins un équipement d'interconnexion situé dans la partie du réseau respectivement associée au contrôleur de réseau ayant initialement défini la correspondance entre l'identifiant de la machine et le paramètre associé dans l'ensemble d'informations, et
- des informations de géo-localisation de ladite machine et/ou dudit contrôleur de réseau.

6. Procédé pour router des données selon l'une quelconque des revendications 1 à 5, comportant une étape de mise à jour, entre ledit contrôleur de réseau et un deuxième contrôleur de réseau, des ensembles d'informations stockés dans leur base de données respective et comprenant chacun un identifiant d'une machine en correspondance avec ledit paramètre associé.

7. Procédé pour router des données selon la revendication 6, selon lequel ladite étape de mise à jour comporte un mécanisme de synchronisation entre elles desdites bases de données.

8. Programme d'ordinateur à installer dans un contrôleur de réseau (4) dans un réseau informatique (1) découpé en segments logiques de réseau et comportant des machines (2), un ensemble d'équipement(s) d'interconnexion (3) des machines et un ensemble de contrôleurs (4) comportant chacun une base de données (5) et associés chacun à au moins une partie respective du réseau, chaque contrôleur définissant des règles comportant au moins des règles de routage pour ladite partie respective associée du réseau, et transmettant lesdites règles aux équipements d'interconnexion de ladite partie respective associée du réseau, un équipement d'interconnexion étant adapté pour router, dans le réseau, en fonction desdites règles qui lui ont été transmises, des données échangées entre deux machines, ledit programme comportant des instructions pour mettre en œuvre les étapes d'un procédé suivant l'une quelconque des revendications 1 à 7 lors d'une exécution du programme par des moyens de traitement du contrôleur de réseau.

9. Contrôleur de réseau (4) comportant une base de données (5) et adapté pour définir des règles comportant au moins des règles de routage pour une partie du réseau qui lui est respectivement associée, et adapté pour transmettre lesdites règles à des équipements d'interconnexion de ladite partie respective associée du réseau qui sont adaptés pour router, dans le réseau, en fonction desdites règles qui lui ont été transmises, des données échangées entre deux machines,
ledit contrôleur de réseau étant destiné à un réseau informatique (1) découpé en segments logiques de réseau, comportant des machines (2), un ensemble d'équipement(s) d'interconnexion (3) des machines et un ensemble de contrôleurs (4) comportant chacun une base de données (5) et associés chacun à au moins une partie respective du réseau, chaque contrôleur définissant des règles comportant au moins des règles de routage pour ladite partie respective associée du réseau, et transmettant lesdites règles aux équipements d'interconnexion de ladite partie respective associée du réseau,
ledit contrôleur de réseau étant **caractérisé en ce qu'**il est adapté pour stocker dans sa base de données, un ensemble d'informations comprenant un identifiant d'une machine en correspondance avec un paramètre associé, ledit paramètre associé comportant u un identifiant d'un contrôleur dont la partie respective du réseau qui lui est associée comprend ladite machine ; et **en ce que**
- ledit contrôleur de réseau est adapté pour transmettre à un autre contrôleur de réseau ledit ensemble d'informations en vue du stockage, par ledit autre contrôleur de réseau, dans sa base de données, dudit ensemble d'informations.

10. Réseau informatique (1) découpé en segments logiques de réseau, ledit réseau informatique comportant des machines (2), un ensemble d'équipement(s) d'interconnexion (3) des machines, un ensemble de contrôleurs (4) comportant chacun une base de données (5) et associés chacun à au moins une partie respective du réseau, chaque contrôleur définissant des règles comportant au moins des règles de routage pour ladite partie respective associée du réseau, et transmettant lesdites règles aux équipements d'interconnexion de ladite partie respective associée du réseau,
dans lequel un équipement d'interconnexion est adapté pour router, dans le réseau, en fonction desdites règles qui lui ont été transmises, des données échangées entre deux machines,
ledit réseau étant **caractérisé en ce que** les contrôleurs de réseau sont des contrôleurs de réseau selon la revendication 9, chacun desdits contrôleurs étant adapté en outre pour stocker dans sa base de données, un ensemble d'informations qui leur est transmis par un autre contrôleur de réseau, ledit ensemble d'information comprenant un identifiant d'une machine en correspondance avec un paramètre associé comportant un identifiant du segment logique de réseau associé à ladite machine et/ou un identifiant d'un contrôleur dont la partie respective du réseau qui lui est associée comprend ladite machine.

## Patentansprüche

1. Verfahren zum Routen von Daten in einem Computernetzwerk (1), das in logische Netzwerksegmente unterteilt ist, das Computernetzwerk umfassend:
- Maschinen (2),
- eine Einheit von Verbindungsgerät(en) (3) von Maschinen und
- eine Einheit von Steuerungen (4), jeweils umfassend eine Datenbank (5) und die jeweils mit mindestens einem jeweiligen Teil des Netzwerks assoziiert sind, wobei jede Steuerung Regeln definiert, umfassend mindestens Routing-Regeln für den jeweiligen assoziierten Teil des Netzwerks, und die Regeln an die Verbindungsgeräte des jeweiligen assoziierten Teils des Netzwerks überträgt,
wobei ein Verbindungsgerät angepasst ist, um in dem Netzwerk abhängig von den genannten, ihm übertragenen Regeln Daten zu routen, die zwischen zwei Maschinen ausgetauscht werden,
wobei das Verfahren **dadurch gekennzeichnet ist, dass** das Verfahren die folgenden Schritte umfasst:
- einen Speicherungsschritt, bei dem eine Netzwerk-Steuerung in ihrer Datenbank einen Satz von Informationen speichert, umfassend eine Kennung einer Maschine in Übereinstimmung mit einem assoziierten Parameter, wobei der assoziierte Parameter eine Kennung des logischen Netzwerksegments umfasst, das mit der Maschine assoziiert ist;
- einen Übertragungsschritt der Informationseinheit durch die Netzwerk-Steuerung an eine andere Netzwerk-Steuerung, und einen Speicherungsschritt der Informationseinheit durch die andere Netzwerk-Steuerung in ihrer Datenbank.

2. Verfahren zum Routen von Daten nach Anspruch 1, wobei die Kennung der Maschine (2) eine physische Adresse der Maschine ist.

3. Verfahren zum Routen von Daten nach Anspruch 1 oder 2, wobei die Regeln, die mindestens Routing-Regeln umfassen, von einer Netzwerk-Steuerung (4) abhängig von mindestens der Kennung der Maschine und dem assoziierten Parameter, die entsprechend in seiner Datenbank gespeichert sind, definiert werden.

4. Verfahren zum Routen von Daten nach einem der Ansprüche 1 bis 3, wobei die identifizierte Steuerung (4) eine Steuerung ist, die Routing-Regeln an das Verbindungsgerät überträgt, mit der die Maschine direkt verbunden ist.

5. Verfahren zum Routen von Daten nach einem der Ansprüche 1 bis 4, wobei die Informationseinheit die Kennung der Maschine (2) in Übereinstimmung mit dem assoziierten Parameter und mindestens einen der folgenden Elemente umfasst:
- mindestens eine IP-Adresse, die die Maschine identifiziert, für mindestens eines der Verbindungsgeräte (3);
- die Angabe einer Gültigkeit der Informationseinheit;
- die Angabe eines Authentifizierungsmechanismus der Informationseinheit;
- eine Adresse einer Netzwerk-Steuerung (4), die anfangs die Entsprechung zwischen der Kennung der Maschine und dem assoziierten Parameter in der Informationseinheit definiert hat;
- eine virtuelle Segmentkennung vom Typ VLAN- oder VxLAN-Tag;
- mindestens eine IP-Adresse von mindestens einem Verbindungsgerät, das sich in dem Teil des Netzwerks befindet, der jeweils der Netzwerk-Steuerung assoziiert ist, die anfangs die Entsprechung zwischen der Kennung der Maschine und dem assoziierten Parameter in der Informationseinheit definiert hat, und
- Informationen über die Geolokalisierung der Maschine und/oder der Netzwerk-Steuerung.

6. Verfahren zum Routen von Daten nach einem der Ansprüche 1 bis 5, umfassend einen Aktualisierungsschritt, zwischen der Netzwerk-Steuerung und einer zweiten Netzwerk-Steuerung, von Informationseinheiten, die in ihren jeweiligen Datenbanken gespeichert sind und jeweils eine Kennung einer Maschine in Übereinstimmung mit dem assoziierten Parameter umfassen.

7. Verfahren zum Routen von Daten nach Anspruch 6, wobei der Aktualisierungsschritt einen Synchronisationsmechanismus der Datenbanken untereinander umfasst.

8. Computerprogramm zur Installation in einer Netzwerk-Steuerung (4) in einem Computernetzwerk (1), das in logische Netzwerksegmente unterteilt ist und Maschinen (2), eine Einheit von Verbindungsgerät(en) (3) der Maschinen und eine Einheit von Steuerungen (4) umfasst, die jeweils eine Datenbank (5) umfassen und jeweils mit mindestens einem jeweiligen Teil des Netzwerks verbunden sind, wobei jede Steuerung Regeln definiert, die mindestens Routing-Regeln für den jeweiligen assoziierten Teil des Netzwerks umfassen, und diese Regeln an die Verbindungsgeräte des jeweils assoziierten Teils des Netzwerks überträgt, wobei ein Verbindungsgerät angepasst ist, um in dem Netzwerk abhängig von den an es übertragenen Regeln Daten zu routen, die zwischen zwei Maschinen ausgetauscht werden, das Programm umfassend Anweisungen, um bei einer Ausführung des Programms durch Verarbeitungseinrichtungen der Netzwerk-Steuerung die Schritte eines Verfahrens nach einem der Ansprüche 1 bis 7 auszuführen.

9. Netzwerk-Steuerung (4), umfassend eine Datenbank (5) und die angepasst ist, um Regeln zu definieren, die mindestens Routing-Regeln für einen ihm jeweils assoziierten Teil des Netzwerks umfassen, und angepasst ist, um die Regeln an Verbindungsgeräte des jeweils assoziierten Teils des Netzwerks zu übertragen, die angepasst sind, um in dem Netzwerk abhängig von den an sie übertragenen Regeln Daten zu routen, die zwischen zwei Maschinen ausgetauscht werden,
wobei die Netzwerk-Steuerung für ein Computernetzwerk (1) bestimmt ist, das in logische Netzwerksegmente unterteilt ist und Maschinen (2), eine Einheit von Verbindunggerät(en) (3) der Maschinen und eine Einheit von Steuerungen (4) umfasst, jeweils umfassend eine Datenbank (5) und die jeweils mit mindestens einem jeweiligen Teil des Netzwerks assoziiert sind, wobei jede Steuerung Regeln definiert, umfassend mindestens Routing-Regeln für den jeweiligen assoziierten Teil des Netzwerks, und die Regeln an die Verbindungsgeräte des jeweiligen assoziierten Teils des Netzwerks überträgt,
wobei der Netzwerk-Steuerung **dadurch gekennzeichnet ist, dass** sie angepasst ist, um in ihrer Datenbank eine Informationseinheit zu speichern, umfassend eine Kennung einer Maschine in Übereinstimmung mit einem assoziierten Parameter, wobei der assoziierte Parameter eine Kennung einer Steuerung umfasst, deren jeweiliger assoziierter Teil des Netzwerks die Maschine umfasst; und, dass
- die Netzwerk-Steuerung angepasst ist, um den Satz von Informationen an eine andere Netzwerk-Steuerung zu übertragen, um Informationseinheit in der Datenbank der anderen Netzwerk-Steuerung zu speichern.

10. Computernetzwerk (1), das in logische Netzwerksegmente unterteilt ist, das Computernetzwerk umfassend Maschinen (2), eine Einheit von Verbindunggerät(en) (3) der Maschinen und eine Einheit von Steuerungen (4), jeweils umfassend eine Datenbank (5) und die jeweils mit mindestens einem jeweiligen Teil des Netzwerks assoziiert sind, wobei jede Steuerung Regeln definiert, umfassend mindestens Routing-Regeln für den jeweiligen assoziierten Teil des Netzwerks, und die Regeln an die Verbindungsgeräte des jeweiligen assoziierten Teils des Netzwerks überträgt,
wobei ein Verbindungsgerät angepasst ist, um in dem Netzwerk abhängig von den genannten, ihm übertragenen Regeln Daten zu routen, die zwischen zwei Maschinen ausgetauscht werden,
wobei das Netzwerk **dadurch gekennzeichnet ist, dass** die Netzwerk-Steuerung Netzwerk-Steuerungen nach Anspruch 9 sind, wobei jeder der Steuerungen ferner angepasst ist, um in ihrer Datenbank eine Informationseinheit zu speichern, die ihnen von einem anderen Netzwerk-Steuerung übertragen wird, wobei die Informationseinheit eine Kennung einer Maschine in Übereinstimmung mit einem assoziierten Parameter umfasst, der eine Kennung des logischen Netzwerksegments, das mit der Maschine assoziiert ist, und/oder eine Kennung einer Steuerung umfasst, deren jeweiliger assoziierter Teil des Netzwerks die Maschine umfasst.

## Claims

1. A method for routing data in a computer network (1) cut out into logic network segments, said computer network including:
- machines (2),
- a set of pieces of interconnection equipment (3) for the machines, and
- a set of controllers (4) each including a database (5) and each associated with at least one respective portion of the network, each controller defining rules including at least routing rules for said respective portion associated with the network, and transmitting said rules to the pieces of interconnection equipment of said respective associated portion of the network,
according to which a piece of interconnection equipment is adapted for routing, in the network, according to said rules which have been transmitted to it, exchange data between two machines,
said method being **characterized in that** it comprises the following steps:
- a step for storage, by a network controller, in its database, of a set of pieces of information comprising an identifier of a machine matching an associated parameter, said associated parameter including an identifier of the logic network segment associated with said machine;
- a step for transmitting with said network controller to another network controller said set of information, and a step for storing with said other network controller, in its database, said set of information.

2. The method for routing data according to claim 1, according to which said identifier of the machine (2) is a physical address of said machine.

3. The method for routing data according to claim 1 or 2, according to which said rules including at least routing rules are defined by a network controller (4) according to at least the identifier of the machine and to said associated parameter correspondingly stored in its database.

4. The method for routing data according to any one of claims 1 to 3, according to which the identified controller (4) is a controller transmitting routing rules to the piece of interconnection equipment to which said machine is directly connected.

5. The method for routing data according to any one of claims 1 to 4, according to which the set of pieces of information comprises the identifier of the machine (2) matched with the associated parameter and at least one of the elements from:
- at least one IP address identifying said machine for at least one of the pieces of interconnection equipment (3);
- the indication of validity of said set of information;
- the indication of a mechanism for authentication of said set of information;
- an address of a network controller (4) having initially defined correspondence between the identifier of the machine and the associated parameter in the set of information;
- a virtual segment identifier of the VLAN or VxLAN tag type;
- at least one IP address of at least one piece of interconnection equipment located in the portion of the network respectively associated with the network controller having initially defined the match between the identifier of the machine and the associated parameter in the set of information, and
- geo-localization information of said machine and/or of said network controller.

6. The method for routing data according to any one of claims 1 to 5, including a step, between said network controller and a second network controller for updating the sets of pieces of information stored in their respective database and each comprising an identifier of a machine matching said associated parameter.

7. The method for routing data according to claim 6, according to which said updating step includes a mechanism for synchronizing said databases with each other.

8. A computer program to be installed in a network controller (4) in a computer network (1) cut out into logic network segments and including machines (2), a set of pieces of interconnection equipment (3) of the machines and a set of controllers (4) each including a database (5) and each associated with at least one respective portion of the network, each controller defining rules including at least routing rules for said respective portion associated with the network, and transmitting said rules to the pieces of interconnection equipment of said respective associated portion of the network, a piece of interconnection equipment being adapted for routing, in the network, depending on the rules which have been transmitted to it, exchanged data between two machines, said program including instructions for applying the steps of the method according to any one of claims 1 to 7 upon executing the program with the processing means of the network controller.

9. A network controller (4) including a database (5) and adapted for defining rules including at least routing rules for a portion of the network which is respectively associated with it, and adapted for transmitting said rules to pieces of interconnection equipment of said respective associated portion of the network which are adapted for routing, in the network, depending on said rules which have been transmitted to it, exchanged data between two machines,
said network controller being intended for a computer network (1) cut out into logic network segments, including machines (2), a set of pieces of interconnection equipment (3) for the machines and a set of controllers (4) each including a database (5) and each associated with at least one respective portion of the network, each controller defining rules including at least routing rules for said respective associated portion of the network, and transmitting said rules to the pieces of interconnection equipment of said respective associated portion of the network,
said network controller being **characterized in that** it is adapted for storing in its database, a set of pieces of information comprising an identifier of a machine matched with an associated parameter, said associated parameter including an identifier of the logic network segment associated with said machine; and **in that**
- said network controller is adapted for transmitting to another network controller said set of information with view to storage, by said other network controller, in its database of said set of information.

10. A computer network (1) cut out into logic network segments, said computer network including machines (2), a set of pieces of interconnection equipment (3) of the machines, a set of controllers (4) each including a database (5) and each associated with at least one respective portion of the network, each controller defining rules including at least routing rules for said respective associated portion of the network, and transmitting said rules to the pieces of interconnection equipment of said respective associated portion of the network,
wherein a piece of interconnection equipment is adapted for routing, in the network, according to said rules which have been transmitted to it, exchanged data between two machines,
said network being **characterized in that** the network controllers are network controllers according to claim 9, each of said controllers being further adapted so as to store in its database, a set of information which is transmitted to them by another network controller, said set of information comprising an identifier of a machine matched with an associated parameter including a logic network segment identifier associated with said machine and/or an identifier of a controller for which the respective portion of the network which is associated with it comprises said machine.
